(19) Europäisches Patentamt
European Patent Office
Office européen des brevets

(11) EP 2 035 494 B1

(12) # FASCICULE DE BREVET EUROPEEN

(45) Date de publication et mention de la délivrance du brevet:
**21.08.2013 Bulletin 2013/34**

(21) Numéro de dépôt: **07786726.5**

(22) Date de dépôt: **05.06.2007**

(51) Int Cl.:
***C08J 9/02*** *(2006.01)* ***C08L 83/04*** *(2006.01)*
***C08J 9/00*** *(2006.01)* ***C08K 5/05*** *(2006.01)*

(86) Numéro de dépôt international:
**PCT/EP2007/055493**

(87) Numéro de publication internationale:
**WO 2007/141250 (13.12.2007 Gazette 2007/50)**

(54) **COMPOSITION ORGANOPOLYSILOXANE POUR MOUSSE ELASTOMERE**

ORGANOPOLYSILOXANZUSAMMENSETZUNG FÜR ELASTOMERSCHAUMSTOFF

ORGANOPOLYSILOXANE COMPOSITION FOR ELASTOMER FOAM

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **07.06.2006 FR 0605061**

(43) Date de publication de la demande:
**18.03.2009 Bulletin 2009/12**

(73) Titulaire: **Bluestar Silicones France SAS**
**69003 Lyon Cedex 03 (FR)**

(72) Inventeurs:
- **BLANC, Delphine**
  **F-69007 Lyon (FR)**
- **CASAS, Roser**
  **E-08150 Barcelona (ES)**
- **PUSINERI, Christian**
  **F-69360 Serezin Du Rhone (FR)**

(56) Documents cités:
**EP-A2- 0 355 429**
**FR-A1- 2 694 760**
**FR-A3- 2 686 547**
**US-A- 4 418 157**
**US-A- 4 590 222**
**US-A- 4 808 634**
**US-A- 4 871 782**
**US-A- 5 252 627**
**US-A- 5 744 507**
**US-A- 5 744 508**
**US-A- 5 900 438**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention a trait à de nouvelles compositions organopolysiloxaniques destinées à générer une mousse élastomère (appelée « mousse de silicone » ou « mousse silicone ») de faible densité, c'est à dire inférieure à 0,20 g/cm$^3$, et présentant de bonnes propriétés mécaniques.

L'expression « mousse de silicone » ou « mousse silicone » désigne une composition de polyorganosiloxane sous la forme de mousse. Les mousses de silicone sont bien connues dans la technique et leur préparation est décrite dans un certain nombre de brevets.

Il existe plusieurs techniques d'obtention de mousses silicone. Une première technique met en oeuvre une réaction de condensation avec libération de sous-produits volatils. C'est le cas notamment pour les systèmes utilisant la réaction de condensation du type SiH-SiOH qui permet de libérer de l'hydrogène. Par exemple, dans le brevet français n° FR-A-2 589 872 il est décrit une composition précurseur de mousse de silicone comprenant un polymère organosilicié comprenant des motifs siloxanes ayant des groupes hydroxyles liés au silicium, un polymère organosilicié comprenant des motifs siloxanes ayant des atomes d'hydrogène liés au silicium, un catalyseur, par exemple un composé de l'étain, et une charge finement divisée comprenant de la silice qui a été traitée pour devenir hydrophobe. Ces compositions durcissent par une réaction de polycondensation et bien qu'étant satisfaisantes à beaucoup d'égards, les compositions catalysées à l'étain décrites dans le brevet français n° FR-A-2 589 872 sont considérées comme peu satisfaisantes du fait de l'utilisation d'un catalyseur à l'étain qui peut exercer certains effets toxiques indésirables. De plus, les mousses ainsi obtenues nécessitent, pour présenter des caractéristiques acceptables, l'utilisation d'un mélangeur dynamique et même ainsi la régularité du moussage est assez délicate à assurer. Le coût de ce type de produit est relativement élevé.

Une variante décrite dans le brevet américain n° US-B-3,923,705 a consisté à proposer des compositions comprenant des polydiorganosiloxanes portant des atomes d'hydrogène liés au silicium disponible pour une réaction de condensation avec des polydiorganosiloxanes portant des groupes hydroxyles liés au silicium (silanols) en présence d'un catalyseur au platine. Cette réaction permet ainsi de construire le réseau tout en produisant de l'hydrogène gazeux nécessaire à la formation d'une mousse de silicone. Dans ce type de formulation, la formation de gaz est aussi proportionnelle à la vitesse de réticulation et par conséquent la densité des mousses obtenues est difficilement contrôlable expliquant ainsi les difficultés à obtenir des mousses de basse densité par cette technique. Ces compositions peuvent comprendre en outre un polydiorganosiloxane portant des groupes vinyle liés au silicium qui réticulent simultanément par des réaction de polyaddition avec les polydiorganosiloxanes portant des atomes d'hydrogène liés au silicium participant ainsi à la construction du réseau de la mousse de silicone.

Selon une autre variante décrite dans le brevet américain n° US-B-4,189,545, des mousses de silicone sont préparées à partir de composition <u>comprenant de l'eau</u>, un polydiorganosiloxane portant des groupes vinyle liés au silicium, un polydiorganosiloxane portant des atomes d'hydrogène liés au silicium, portés par des motifs dans la chaîne et non pas uniquement en bout de chaîne pour pouvoir jouer un rôle de réticulant. <u>L'eau réagit</u> avec le polysiloxane à fonction hydrures produisant ainsi de l'hydrogène gazeux et un silanol. Le silanol réagit alors avec le polydiorganosiloxane à fonction hydrures par une réaction de condensation générant ainsi une deuxième molécule d'hydrogène gazeux alors qu'un autre polydiorganosiloxane portant des groupes vinyle liés au silicium va simultanément réagir par une réaction d'addition avec un autre polydiorganosiloxane à fonction hydrure, participant ainsi à la construction du réseau de la mousse de silicone. L'apport principal apporté par cette technique est que l'hydrogène gazeux est produit sans addition de silanol et avec l'addition d'une petite quantité d'eau.

Une autre technique utilise des agents ou des additifs porogènes, additionnés dans la matrice silicone, qui, sous l'action de la chaleur, expansent le matériau :

- soit par décomposition avec libération de gaz, cas notamment des dérivés de type azo, par exemple l'azodicarbonamide, qui va permettre de libérer de l'azote, du gaz carbonique et de l'ammoniaque. Ce type d'agent porophore, malgré le fait qu'il soit largement utilisé pour d'autres matériaux, pose de sérieux problèmes de toxicité (libération d'hydrazine),
- soit par changement de phase (liquide à gaz) - cas notamment de solvants à faible point d'ébullition.

Une autre technique met en oeuvre une introduction mécanique d'un gaz (azote) dans la matrice silicone sous pression suivi d'un passage dans un mélangeur dynamique ce qui permet d'accéder à des mousses ayant de bonnes caractéristiques, mais elles nécessitent un équipement très lourd et onéreux.

Enfin, on peut aussi citer une technique mettant en oeuvre des micro-ondes (brevet américain n ° US-B-4,026,844).

Cependant, les techniques faisant usage de silanol comme source d'agent porophore ont tendance à donner des mousses présentant des densités trop élevées pour de nombreuses applications, par exemple celles destinées pour l'industrie du transport. De plus, lorsque des mousses de densité moyenne sont obtenues, cela se fait le plus souvent au détriment des propriétés mécaniques (résistance à la rupture, résistance au déchirement,...).

La production de mousses de silicones de basse densité à partir de composition peu visqueuse reste toujours un problème qui suscite l'intérêt. Par exemple, le brevet américain n° US-B-4,418,157 décrit des compositions précurseurs de mousses de silicone présentant, avant réticulation, une viscosité inférieure à 100 000 mPa.s. Comme il est indiqué dans ce brevet, il est connu (voir colonne 2, lignes 13 à 24) que plus la viscosité de la composition est élevée et plus la mousse résultante est moins dense. C'est ainsi qu'une nouvelle approche est décrite dans ce brevet qui consiste à préparer une composition ayant une viscosité inférieure à 100 000 mPa.s et comprenant une base silicone apte à réticuler par polyaddition ou polycondensation, une résine silicone de type « MQ » (nomenclature des silicones telle que décrite par exemple dans l'ouvrage de Walter NOLL "Chemistry and Technology of Silicones", Academic Press, 1968, 2ème édition, aux pages 1 à 9), comportant éventuellement des fonctions vinylées et de l'eau qui est décrit comme un constituant clé pour la genèse d'hydrogène gazeux comme décrit ci-dessus.

Comme autre exemple de mousses de silicone de basse densité, on peut citer le brevet américain n° US-B-5,436,274 qui décrit des compositions comprenant une base silicone apte à réticuler par polyaddition, une résine silicone de type « MQ » comportant des fonctions vinylées et de l'eau, dont la présence est indispensable (référencée réactif D dans ce brevet) et un mélange d'un alcool (« alcanol ») et d'un diol spécifique.

Cependant, ces compositions précurseurs de mousses de silicone de basse densité présentent comme inconvénient de présenter des problèmes d'homogénéité au stockage du fait de la séparation de l'eau des autres constituants. Par exemple, dans le cas de compositions précurseurs se présentant sous la forme de bi-composant et après un long stockage, il est alors nécessaire de mélanger l'eau aux autres constituants, avant de mélanger les deux parties de la composition. En effet, comme cela est clairement indiqué dans le brevet français n° FR-A-2419962 (équivalent du brevet américain n° US-B-4,189,545), il est essentiel que l'eau puisse réagir avec le polysiloxane à fonction hydrures (≡SiH) dans la chaîne à raison d'au moins 0,2 mole d'hydrure par mole d'eau pour que suffisamment d'hydrogène gazeux soit libéré pour produire une mousse convenable.

De plus, bien que les compositions décrites dans le brevet américain n° US-B-4,418,157 (exemples 1 à 4) permettent de générer des mousses ayant de bonnes propriétés mécaniques, les densités obtenues sont comprises entre 0,28 et 0,41 g/cm$^3$ qui ne sont donc plus adaptées aux attentes de l'industrie, par exemple l'industrie du transport, qui est toujours à la recherche de mousses de moins en moins dense afin d'alléger les structures (automobiles, avions, trains, bateaux,...) tout en maintenant les bonnes propriétés mécaniques.

Un exemple d'une composition précurseur de mousse de silicone présentant une résistance améliorée à la combustion est décrit dans la référence WO-A-00/46282. La composition décrite comprend une base silicone réticulant par une réaction de polyaddition (huile polyorganosiloxanes à fonction ≡SiH/ huiles polyorganosiloxane à fonction ≡SiVi/ catalyseur au Pt, avec Vi= groupement vinyle), un composé à fonction hydroxyle et de la wollastonite (les exemples décrivent des compositions fortement chargées, environ 21 parties en poids de charges par rapport au poids total de la composition). Il est à noter que les viscosités des compositions préparées dans les exemples (Exemple 1, Tableau 2) sont toutes supérieures à 190 000 mPa.s. Comme il est indiqué ci-dessus, il est connu (US-B-4,418,157 voir colonne 2, lignes 13 à 24) que plus la viscosité de la composition est élevée plus la mousse résultante est moins dense. On remarquera que de la composition la plus visqueuse (Tableau 2, page 13, composition [1-1], viscosité de 274,000 mPa.s) à la composition la moins visqueuse [1-3] (viscosité = 198,000 mPa.s) la densité de la mousse obtenue augmente (de 0,20 g/cm$^3$ à 0,25 g/cm$^3$) confirmant ainsi l'enseignement connu concernant la difficulté d'obtenir des mousses de faible densité à partir de composition de faible viscosité avant réticulation. Hors, pour des raisons d'optimisation quand à la mise en oeuvre de ces compositions, soit par l'utilisateur final soit par les industriels utilisant des lignes de production de mousse de silicone, il est vital de pouvoir disposer d'une composition qui, avant réticulation, se présente sous une forme peu visqueuse et s'écoulant facilement dans les outils appropriés. Par « composition peu visqueuse » on entend des compositions ayant une viscosité à 25°C inférieure à 15 000 mPa.s.

De plus, l'industrie des mousses de silicones est toujours à la recherche de nouvelles compositions, précurseurs de mousse de silicone, ayant une faible viscosité, c'est-à-dire inférieure à 15 000 mPa.s à 25°C, et susceptible de présenter de bonnes propriétés de résistance à la combustion. En effet, un excellent comportement à la flamme est cependant nécessaire puisque les mousses silicones sont fréquemment utilisées pour la protection d'organes essentiels, tels que des câbles électriques, des relais électroniques, affectés par exemple à des appareillages traitant des produits dangereux ou à des dispositifs véhiculant des êtres humains. Le mauvais état de marche de ces organes lors d'un incendie pourrait empêcher le fonctionnement des systèmes d'alerte ou de sécurité.

La problématique ici considérée peut donc se résumer comme la recherche d'un compromis technique entre des spécifications, à priori antinomiques, pour la préparation d'une composition de faible viscosité, c'est-à-dire inférieure à 50 000 mPa.s, précurseur d'une mousse de silicone de faible densité, c'est-à-dire inférieure à 0,20 g/cm$^3$ et ayant de bonnes propriétés mécaniques.

La présente invention a donc pour objectif de fournir une nouvelle composition organopolysiloxanique de faible viscosité, c'est-à-dire inférieure à 15 000 mPa.s, destinée à générer après réticulation une mousse de silicone de faible densité, c'est à dire inférieure à 0,20 g/cm$^3$, et présentant de bonnes propriétés mécaniques.

Un autre objectif de l'invention est de fournir une nouvelle composition organopolysiloxanique de faible viscosité,

c'est-à-dire inférieure à 15 000 mPa.s, destinée à générer, après réticulation, une mousse de silicone de faible densité et présentant de bonnes propriétés de résistance à la combustion.

La demanderesse a maintenant trouvé de manière très surprenante qu'il est possible d'obtenir une mousse de silicone présentant les propriétés suivantes :

- une densité inférieure à 0,20 g/cm$^3$, et
- une résistance à la rupture supérieure à 0,10 MPa;

à partir d'une composition spécifique dont la viscosité avant réticulation est inférieure à 15 000 mPa.s.

La présente invention a donc pour objet une composition organopolysiloxanique qui après réticulation forme une mousse présentant les propriétés suivantes :

- une densité inférieure à 0,20 g/cm$^3$,
- une résistance à la rupture supérieure à 0,10 MPa;
- ladite composition ne comprenant pas avant réticulation:

  (i) d'eau comme agent porogène susceptible de générer en présence d'un polysiloxane à fonction hydrures de l'hydrogène gazeux,
  (ii) de polyorganosiloxane comportant des groupes hydroxyles, et
  (iii) de polydiorganosiloxane cyclique comportant des fonctions ≡SiH, et

- ladite composition étant constituée de :

  (A) au moins un polyorganosiloxane **(A)** présentant, par molécule, au moins deux groupes alcényles, en $C_2$-$C_6$ liés au silicium, et ayant une viscosité comprise entre 10 et 300 000 mPa.s,
  (B) au moins un polyorganosiloxane **(B)** présentant, par molécule, au moins deux atomes d'hydrogène liés au silicium et de préférence au moins trois motifs ≡SiH et ayant une viscosité comprise entre 1 et 5000 mPa.s,
  (C) une quantité catalytiquement efficace d'au moins un catalyseur **(C)** composé d'au moins un métal appartenant au groupe du platine,
  (D) au moins un composé **(D)** choisi parmi le groupe constitué par le n-propanol, le n-butanol, le n-hexanol et le n-octanol,
  (E) éventuellement au moins une huile **(E)** diorganopolysiloxanique bloquée à chaque extrémité de sa chaîne par un motif triorganosiloxy dont les radicaux organiques liés aux atomes de silicium, sont choisis parmi les radicaux alkyles ayant de 1 à 8 atomes de carbone inclus tels que les groupes méthyle, éthyle, propyle et 3,3,3.trifluoropropyte, des groupes cycloalkyles comme les groupes cyclohexyle, cycloheptyle, cyclooctyle et les groupes aryle tels que xylyle, tolyle et phényle,
  (F) éventuellement au moins une charge minérale et/ou métallique **(F),**
  (G) éventuellement au moins un additif **(G),** et
  (H) au moins une résine polyorganosiloxane **(H)** répondant aux conditions (1) et (2) suivantes :

    (1) ladite résine est présente à raison d'au moins 10% en poids par rapport au poids total du polyorganosiloxane **(A)** et de la résine polyorganosiloxane **(H)** (= ratio en poids (H)/[(A)+(H)] x 100) ; et
    (2) ladite résine comprend au moins deux motifs siloxyles différents choisis parmi ceux de formules **(I)** et **(II)** suivantes:

$$W_a \, Z_b \, SiO_{(4-(a+b))/2} \qquad \textbf{(I)}$$

    dans laquelle :

    - les symboles W, identiques ou différents, représentent chacun un groupe alcényle en $C_2$-$C_6$;
    - les symboles Z, identiques ou différents, représentent chacun un groupe hydrocarboné monovalent non hydrolysable, exempt d'action défavorable sur l'activité du catalyseur, éventuellement halogéné et, de préférence choisi parmi les groupes alkyles ainsi que parmi les groupes aryles, et
    - a est 1 ou 2, de préférence 1, b est 0, 1 ou 2 et la somme a + b est égale à 1, 2 ou 3, et

$$Z_c\,SiO_{(4-c)/2} \qquad \textbf{(II)}$$

dans laquelle Z a la même signification que ci-dessus et c est égal à 0, 1, 2 ou 3, et l'un au moins des motifs **(I)** ou **(II)** est un motif T ou Q,

- avec comme condition supplémentaire que le choix, la nature et la quantité des constituants sont déterminés de manière à ce que la viscosité de ladite composition doit être inférieure à 15 000 mPa.s.

Toutes les viscosités dont il est question dans le présent mémoire correspondent à une grandeur de viscosité dynamique qui est mesurée, de manière connue en soi, à 25°C. les viscosités sont mesurées à l'aide d'un viscosimètre BROOKFIELD selon les indications de la norme AFNOR NFT 76 106 de mai 1982. Ces viscosités correspondent à une grandeur de viscosité dynamique à 25°C dite "Newtonienne", c'est-à-dire la viscosité dynamique qui est mesurée, de manière connue en soi, à un gradient de vitesse de cisaillement suffisamment faible pour que la viscosité mesurée soit indépendante du gradient de vitesse.

Comme cela est connu en soi, le polyorganosiloxane (A) présentant, par molécule, au moins deux groupes alcényles, en $C_2$-$C_6$ liés au silicium, et ayant une viscosité comprise entre 10 et 300 000 mPa.s, peut être notamment formé d'au moins deux motifs siloxyle de formule :

$$Y_dR_eSiO_{\frac{(4-d-e)}{2}}$$

**(III)**

dans laquelle :

- Y est un alcényle en $C_2$-$C_6$, de préférence vinyle,
- R est un groupe hydrocarboné monovalent n'ayant pas d'action défavorable sur l'activité du catalyseur et est généralement choisi parmi les groupes alkyles ayant de 1 à 8 atomes de carbone inclus tels que les groupes méthyle, éthyle, propyle et 3,3,3-trifluoropropyle, les groupes cycloalkyles comme les groupes cyclohexyle, cycloheptyle, cyclooctyle et les groupes aryle tels que xylyle, tolyle et phényle,
- d est 1 ou 2, e est 0, 1 ou 2 et d + e=1, 2 ou 3, éventuellement tous les autres motifs étant des motifs de formule moyenne :

$$R_fSiO_{\frac{4-f}{2}}$$

**(IV)**

dans laquelle R a la même signification que ci-dessus et f = 0, 1, 2 ou 3.

Des exemples de polyorganosiloxane **(A)** sont, par exemple, les diméthylpolysiloxanes à extrémités diméthylvinylsilyles, les copolymères (méthylvinyl) (diméthyl) polysiloxanes à extrémités triméthylsilyles, les copolymères (méthylvinyl) (diméthyl) polysiloxanes à extrémités diméthylvinylsilyles.

Dans la forme la plus recommandée le polyorganosiloxane **(A)** contient des motifs siloxy vinyliques terminaux.

Comme cela est connu en soi, le polyorganosiloxane **(B)** présentant, par molécule, au moins deux atomes d'hydrogène liés au silicium et de préférence au moins trois motifs ≡SiH et ayant une viscosité comprise entre 1 et 5000 mPa.s et peut être notamment formé de motifs siloxyle de formule :

$$H_g\,X_i\,SiO_{\frac{4-g-i}{2}}$$

**(V)**

dans laquelle :

- X est un groupe hydrocarboné monovalent n'ayant pas d'action défavorable sur l'activité du catalyseur et est généralement choisi parmi les groupes alkyles ayant de 1 à 8 atomes de carbone inclus tels que les groupes méthyle, éthyle, propyle et 3,3,3-trifluoropropyle, les groupes cycloalkyles comme les groupes cyclohexyle, cycloheptyle, cyclooctyle et les groupes aryle tels que xylyle, tolyle et phényle,
- g = 1 ou 2, de préférence égal à 1, i = 0, 1 ou 2, et g+i = 1, 2 ou 3, éventuellement tous les autres motifs étant des motifs de formule moyenne :

$$X_jSiO_{\frac{4-j}{2}}$$

**(VI)**

dans laquelle X a la même signification que ci-dessus et j = 0, 1, 2 ou 3.

Des polyorganosiloxane (B) appropriés sont les polyméthylhydrogénosiloxanes, les copolymères méthylhydrogénodiméthylsiloxanes.
Le catalyseur **(C)** composé d'au moins un métal appartenant au groupe du platine est également bien connu. Les métaux du groupe du platine sont ceux connus sous le nom de platinoïdes, appellation qui regroupe, outre le platine, le ruthénium, le rhodium, le palladium, l'osmium et l'iridium. On utilise, de préférence, les composés du platine et du rhodium. On peut, en particulier, utiliser les complexes du platine et d'un produit organique décrit dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593, Le catalyseur généralement préféré est le platine. La préférence va à la solution ou complexe de Karstedt, tel que décrit dans US-A-3 775 452.
Parmi les composés **(D)** utiles selon l'invention, on peut citer le méthanol, l'éthanol, le n-propanol, l'isopropanol, le n-butanol, le 2-butanol, le tert-butanol, le n-hexanol, le n-octanol et l'alcool benzylique. Le n-propanol, le n-butanol, le n-hexanol et le n-octanol sont particulièrement préférés.
De manière préférée, le constituant (E) est un polydiméthylsiloxane linéaire, non fonctionnalisé, c'est-à-dire à motifs récurrents de formule $(CH_3)_2SiO_{2/2}$ et présentant à ses deux extrémités des motifs $(CH_3)_3SiO_{1/2}$.
Comme charge minérale **(F)** on peut citer notamment les charges de renforcement et de remplissage.
Cependant, la nature et la quantité de la charge seront déterminées de manière à obtenir, après mélange de tous les composants, une viscosité de la composition inférieure à 50 000 mPa.s. Ainsi certaines charges seront écartées du fait d'un trop fort pouvoir viscosant.
Ces charges peuvent se présenter sous la forme de produits très finement divisés dont le diamètre particulaire moyen est inférieur à 0,1 μm. Parmi ces charges figurent en particulier les silices de combustion et les silices de précipitation ; leur surface spécifique est généralement supérieure à 10 $m^2/g$ et se situe le plus souvent dans l'intervalle 20-300 $m^2/g$.
Ces charges peuvent également se présenter sous la forme de produits plus grossièrement divisés, de diamètre particulaire moyen supérieur à 0,1μm. Comme exemples de telles charges, on peut citer en particulier le quartz broyé, les silices de diatomées, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum ; leur surface spécifique est généralement inférieure à 30 $m^2/g$.
Des charges peuvent avoir été modifiées en surface, par traitement avec les divers composés organosiliciques habituellement employés pour cet usage. Ainsi, ces composés organosiliciques peuvent être des organochlorosilanes, des diorganocyclopolysiloxanes, des hexaorganodisiloxanes, des hexaorganodisilazanes ou des diorganocyclopolysilazanes (brevets français FR-A-1 126 884, FR-A-1 136 885, FR-A-1 236 505, brevet anglais GB-A-1 024 234). Les charges traitées renferment, dans la plupart des cas, de 3 à 30 % de leur poids de composés organosiliciques. Les charges peuvent être ainsi traitées avant ou après leur incorporation dans la formule.
Les charges peuvent être constituées d'un mélange de plusieurs types de charges de granulométries différentes.
La présence d'une charge métallique **(F)** spécifique permet d'améliorer assez nettement la résistance à la combustion des mousses. Comme charges métalliques **(F)** on peut citer par exemple :

(a) un additif à base d'un mélange de platine avec un oxyde mixte de fer ou un oxyde de cérium-IV tel que décrit dans la demande FR-A-2 757 869, en particulier les mélanges suivants :

- un mélange de platine sous forme de complexe ou de composé du platine et d'un mélange $FeO/Fe_2O_3$;

- un mélange de platine sous forme de complexe ou de composé du platine et d'un oxyde et/ou l'hydroxyde de cérium-IV ;
- un mélange de platine sous forme de complexe ou de composé du platine et d'un constituant qui consiste dans une combinaison de l'oxyde et/ou l'hydroxyde de cérium-IV avec l'oxyde de titane $TiO_2$ ; et
- un mélange de platine sous forme de complexe ou de composé du platine et d'un constituant qui consiste dans une combinaison de l'oxyde et/ou hydroxyde de cérium-IV, d'oxyde de titane $TiO_2$ et d'un composé $FeO/Fe_2O_3$

(b) un mélange de platine et d'un oxyde mixte de fer de formule $(FeO)_x$, $(Fe_2O_3)_y$ où le rapport x / y est compris entre 0,05 / 1 et 1 / 1, tel que décrit dans la demande de brevet JP-A-76/035 501,

(c) un mélange de platine avec au moins un oxyde de métal rare, en particulier un mélange de platine avec de l'oxyde de cérium-IV $CeO_2$ tel que décrit dans les demandes FR-A-2 166 313, EP-A-0 347 349, FR-A-2 166 313 et EP-A-0 347 349,

(d) des oxydes de titane, par exemple les produits commercialisés par la société Degussa sous l'appellation Aeroxide®, par exemple le produit « Aeroxide® TiO2 PF2 », et

(e) les hydroxydes d'aluminium hydratés ou non hydratés, les oxydes de fer et les oxydes ou hydroxyde de cérium.

La charge métallique **(F)** particulièrement préférée est celle décrite dans le paragraphe (a) ou (d) ci-dessus.

Comme additif (G), on peut notamment incorporer un inhibiteur du catalyseur afin de retarder la réticulation. Ces inhibiteurs sont connus. On peut en particulier utiliser les amines organiques, les silazanes, les oximes organiques, les diesters de diacides carboxyliques, les cétones acétyléniques et les alcools acétyléniques (cf. par exemple FR-A-1 528 464, 2 372 874 et 2 704 553). L'inhibiteur, quand on en utilise un, peut être engagé à raison de 0,0001 à 5 parties en poids, de préférence 0,001 à 3 parties en poids, pour 100 parties depolyorganosiloxane (A). Les phosphines, phosphites et phosphonites font aussi partie des inhibiteurs utilisables dans l'invention. On peut notamment citer les composés de formule $P(OR)_3$ décrit le brevet US-B-6 300 455. Ces inhibiteurs sont ajoutés en quantité en poids comprise entre 1 et 50 000 ppm par rapport au poids de la composition silicone totale, notamment entre 10 et 10 000 ppm, de préférence entre 20 et 2000 ppm.

Les résines polyorganosiloxanes (H) sont des oligomères ou polymères organopolysiloxanes ramifiés bien connus et disponibles dans le commerce. Elles se présentent sous la forme de solutions, de préférence siloxaniques. Comme exemples d'oligomères ou de polymères organopolysiloxanes ramifiés on peut citer les résines MO, les résines « MDQ », les résines « TD » et les résines « MDT », les fonctions alcényles pouvant être portées par les motifs siloxyles M, D et/ou T. Comme exemple de résines qui conviennent particulièrement bien, on peut citer les résines MDQ vinylées ayant une teneur pondérale en groupe vinyle comprise entre 0,2 et 10 % en poids.

Une convention admise dans la technique pour la désignation des motifs des silicones suivant le nombre d'atomes d'oxygène liés au silicium, est utilisée ici. Cette convention utilise les lettres M, D, T et Q (abréviations de "mono", "di", "tri" et "quatro") pour désigner ce nombre d'atomes d'oxygène. Cette nomenclature des silicones est par exemple décrite dans l'ouvrage de Walter NOLL "Chemistry and Technology of Silicones", Academic Press, 1968, 2ème édition, aux pages 1 à 9.

Selon une variante préférée de l'invention, la composition organopolysiloxanique selon l'invention est caractérisée en ce que :

- le polyorganosiloxane (A) comporte, par molécule, au moins deux motifs siloxyles terminaux comportant chacun un groupe alcényle, en $C_2$-$C_6$ liés au silicium, et
- ladite composition comprend en outre un deuxième polyorganosiloxane **(A2)** comprenant, par molécule, au moins trois groupes alcényles, en $C_2$-$C_6$ liés au silicium.

Ledit polyorganosiloxane **(A2)** a une viscosité à 25° C comprise entre 10 et 300 000 mPa.s de préférence comprise entre 50 et 10 000 mPa.s et encore plus préférentiellement comprise entre 100 et 5 000 mPa.s et peut être notamment formé d'au moins trois motifs siloxyle de formule :

$$Y_dR_eSiO_{\frac{(4-d-e)}{2}}$$

**(VII)**

dans laquelle :

- Y est un alcényle en $C_2$-$C_6$, de préférence vinyle,
- R est un groupe hydrocarboné monovalent n'ayant pas d'action défavorable sur l'activité du catalyseur et est généralement choisi parmi les groupes alkyles ayant de 1 à 8 atomes de carbone inclus tels que les groupes méthyle, éthyle, propyle et 3,3,3-trifluoropropyle, les groupes cycloalkyles comme les groupes cyclohexyle, cycloheptyle, cyclooctyle et les groupes aryle tels que xylyle, tolyle et phényle,

- d est 1 ou 2, e est 0, 1 ou 2 et d + e=1, 2 ou 3, éventuellement tous les autres motifs étant des motifs de formule moyenne :

$$R_f SiO_{\frac{4-f}{2}}$$

**(VIII)**

dans laquelle R a la même signification que pour le motif **(VII)** et f = 0, 1, 2 ou 3.

Selon un mode de réalisation préféré, le polyorganosiloxane (A2) a une viscosité à 25° C comprise entre 10 et 300 000 mPa.s de préférence comprise entre 50 et 10 000 mPa.s et encore plus préférentiellement comprise entre 100 et 5 000 mPa.s.

Les polyorganosiloxanes vinylés (A) et (A2), Les résines polyorganosiloxanes (H) et les polyorganosiloxanes à fonction hydrure (B) sont en quantités telles que l'on assure un ratio entre les fonction ≡SiH et les ≡SiVi compris notamment entre 0,5 et 10 et de préférence compris entre 1 et 6.

Selon un autre mode de réalisation de l'invention, la composition organopolysiloxanique selon l'invention comprend :

(A) 100 parties en poids d'au moins un polyorganosiloxane **(A)** présentant, par molécule, au moins deux groupes alcényles, en $C_2$-$C_6$ liés au silicium, et ayant une viscosité comprise entre 10 et 300 000 mPa.s,

(B) de 0,5 à 50 parties en poids d'au moins un polyorganosiloxane **(B)** présentant, par molécule, au moins deux atomes d'hydrogène liés au silicium et de préférence au moins trois motifs ≡SiH et ayant une viscosité comprise entre 1 et 5000 mPa.s,

(C) une quantité catalytiquement efficace d'au moins un catalyseur **(C)** composé d'au moins un métal appartenant au groupe du platine,

(D) de 0,05 à 50 parties en poids d'au moins un composé (D) choisi parmi le groupe constitué par le n-propanol, le n-butanol, le n-hexanol et le n-octanol,

(E) de 0 à 50 parties en poids d'au moins une huile **(E)** diorganopolysiloxanique bloquée à chaque extrémité de sa chaîne par un motif triorganosiloxy dont les radicaux organiques liés aux atomes de silicium, sont choisis parmi les radicaux alkyles ayant de 1 à 8 atomes de carbone inclus tels que les groupes méthyle, éthyle, propyle et 3,3,3-trifluoropropyle, les groupes cycloalkyles comme les groupes cyclohexyle, cycloheptyle, cyclooctyle et les groupes aryle tels que xylyle, tolyle et phényle,

(F) de 0 à 150 parties d'au moins une charge minérale et/ou métallique **(F),**

(G) de 0 à 10 parties en poids d'au moins un additif **(G),** et

(H) au moins une résine polyorganosiloxane **(H)** répondant aux conditions (1) et (2) suivantes :

(1) ladite résine est présente à raison d'au moins 10% en poids par rapport au poids total du polyorganosiloxane **(A)** et de la résine polyorganosiloxane **(H)** (= ratio en poids (H)/[(A)+(H)] x 100) ; et

(2) ladite résine comprend au moins deux motifs siloxyles différents choisis parmi ceux de formules:

$$W_a\ Z_b\ SiO_{(4-(a+b))/2} \qquad \textbf{(I)}$$

dans laquelle :

- les symboles W, identiques ou différents, représentent chacun un groupe alcényle en $C_2$-$C_6$;
- les symboles Z, identiques ou différents, représentent chacun un groupe hydrocarboné monovalent non hydrolysable, exempt d'action défavorable sur l'activité du catalyseur, éventuellement halogéné et, de préférence choisi parmi les groupes alkyles ainsi que parmi les groupes aryles, et
- a est 1 ou 2, de préférence 1, b est 0, 1 ou 2 et la somme a + b est égale à 1, 2 ou 3,

avec éventuellement au moins une partie des autres motifs sont des motifs de formule moyenne **(II)** suivante:

$$Z_c\ SiO_{(4-c)/2} \qquad \textbf{(II)}$$

dans laquelle Z a la même signification que ci-dessus et c est égal à 0, 1, 2 ou 3, et l'un au moins des motifs **(I)** ou **(II)** est un motif T ou Q.

- avec comme condition supplémentaire que le choix, la nature et la quantité des constituants sont déterminés de manière à ce que la viscosité de ladite composition doit être inférieure à 15 000 mPa.s.

Selon un autre de ses aspects, la présente invention est relative à un système précurseur {bicomposant (C)} de la composition silicone décrite supra. Un tel système précurseur se présente en deux parties A et B distinctes, destinées à être mélangées pour former la composition. La partie A comprend le catalyseur **(C)** et le composé **(D)** et une partie B comprend le polyorganosiloxane (B), les autres constituants **(A), (E), (F), (G)** et **(H)** sont présents dans la partie A, dans la partie B ou dans les parties A et B.

La présente invention a aussi pour objet une mousse de silicone susceptible d'être obtenue par réticulation d'une composition organopolysiloxanique selon l'invention telle ue définie supra et présentant les propriétés suivantes :

- une densité inférieure à 0,20 g/cm$^3$, et
- une résistance à la rupture supérieure à 0,10 MPa.

Le dernier objet de l'invention concerne les objets obtenus par la mise en forme de mousse de silicone selon l'invention.

L'invention est en particulier utile pour la préparation de mousses de remplissage ou de joints en mousse dans le domaine du bâtiment, du transport, de l'isolation électrique ou de l'électroménager.

L'invention est aussi utile dans le domaine de la tampographie ou paramédical.

La présente invention va maintenant être décrite plus en détails à l'aide de modes de réalisation pris à titre d'exemple non limitatif.

**EXEMPLES 1 à 8 : Préparation de mousses silicone réticulant à température ambiante.**

Dans le présent exposé :

- le terme « Vi » signifie un groupement vinyle « $-CH_2=CH_2$ »,
- l'abréviation « R/R » signifie la résistance à la rupture, en MPa selon la norme AFNOR NF T 46002,
- l'abréviation « A/R » signifie l'allongement à la rupture en % selon la norme précédente,
- l'abréviation « R/d » signifie la résistance à la déchirure en N/mm.

On prépare une composition bi-composante comprenant des parties P1 et P2 dont les compositions sont décrites dans le Tableau 1.

1) <u>Nature des ingrédients cités dans la partie P1 des compositions testées :</u>

- **<u>a</u>** : Résine polyorganosiloxane vinylée comprenant des motifs siloxyles M, $D^{Vi}$ et Q (ou « $MD^{Vi}Q$ »).
- **<u>b</u>** : Huile polydiméthylsiloxane bloquée à chacune des extrémités de chaînes par un motif $Vi(CH_3)_2SiO_{1/2}$ ayant une viscosité de 100 000 mPa.s à 25°C.
- **<u>b1</u> :** Polydiméthylsiloxane bloqué par des motifs $(CH_3)_2ViSiO_{1/2}$ et dont la viscosité est de 3500 mPa.s à 25 °C.
- **<u>b2</u>** : Polydiméthylsiloxane bloqué par des motifs $(CH_3)_2ViSiO_{1/2}$ et dont la viscosité est de 60000 mPa.s à 25°C.
- **<u>b3</u>** : Polydiméthylsiloxane bloqué par des motifs $(CH_3)_2ViSiO_{1/2}$ et dont la viscosité est de 600 mPa.s à 25°C.
- **<u>c</u>** . Terre de diatomées commercialisée sous la dénomination commerciale CELITE-SF.
- **<u>d</u>** : Butanol.
- **<u>d'</u> :** Eau
- **<u>e</u>** : Catalyseur au platine de Karstedt.
- **<u>f</u>** : Huile polydiméthylsiloxane bloquée à chacune des extrémités de chaînes par un motif $(CH_3)_3SiO_{1/2}$ ayant une viscosité de 1000 mPa.s à 25°C.

2) Nature des ingrédients cités dans la partie P2 des compositions:

- **a** : Résine polyorganosiloxane vinylée comprenant des motifs siloxyles M, $D^{Vi}$ et Q (ou « $MD^{Vi}Q$ »), avec M= $(CH_3)_3SiO_{1/2}$, $D^{Vi}$= $(CH_3)ViSiO_{2/2}$ et Q= $SiO_{4/2}$.
- **b :** Huile polydiméthylsiloxane bloquée à chacune des extrémités de chaînes par un motif $Vi(CH_3)_2SiO_{1/2}$ ayant une viscosité de 100 000 mPa.s à 25°C,
- **b1 :** Polydiméthylsiloxane bloqué par des motifs $(CH_3)_2ViSiO_{1/2}$ et dont la viscosité est de 3500 mPa.s. La teneur en vinyle de cette composition est de 0.6 % en poids
- **b2 :** Polydiméthylsiloxane bloqué par des motifs $(CH_3)_2ViSiO_{1/2}$ et dont la viscosité est de de 60000 mPa.s. La teneur en vinyle de cette composition est de 0.8 % en poids.
- **b3 :** Polydiméthylsiloxane bloqué par des motifs $(CH_3)_2ViSiO_{1/2}$ et dont la viscosité est de 600 mPa.s à 25 °C.
- **f :** Huile polydiméthylsiloxane bloquée à chacune des extrémités de chaînes par un motif $(CH_3)_3SiO_{1/2}$ ayant une viscosité de 1000 mPa.s à 25°C.
- **g :** Huile poly(vinylméthyl)(diméthyl)siloxane comprenant ayant une teneur en motif $D^{Vi}$ de 2 % en poids et en motif $M^{Vi}$ de 0,4 % en poids (huile avec groupements vinylés pendant).
- **i** : Huile polydiméthylsiloxane bloquée à chacune des extrémités de chaînes par un motif $(CH_3)_2HSiO_{1/2}$.
- **h** : Huile polyméthylhydrogénosiloxane bloquée à chacune des extrémités de chaînes par un motif $(CH_3)_3SiO_{1/2}$.
- **j**: Solution contenant 1% d'éthynylcyclohexanol dans une huile polydiméthylsiloxane bloqué par des motifs $(CH_3)_2ViSiO_{1/2}$ et ayant une viscosité de 600 mPa.s à 25°C.

Le Tableau 1 ci-après décrit les compositions testées.

Tableau 1 :

| | Constituants | COMPOSITIONS : PARTIES EN POIDS<br>Exemple 1 | Exemple 2 | Exemple 3 | Exemple 4 | Exemple 5 | Contre-exemple 6 | Contre-exemple 7 | Contre-exemple 8 |
|---|---|---|---|---|---|---|---|---|---|
| Partie P1 | a | 18.75 | 20.25 | 32.4 | 20.25 | 20.25 | 0 | 0 | 20.25 |
| | b1 | 56.25 | 60.75 | 0 | 60.75 | 60.75 | 0 | 87 | 60.75 |
| | b2 | 0 | 0 | 48,6 | 0 | 0 | 0 | 0 | 0 |
| | b3 | 0 | 0 | 6 | 0 | 0 | 0 | 0 | 0 |
| | b | 6 | 6 | 0 | 6 | 6 | 87 | 0 | 6 |
| | c | 10 | 10 | 10 | 10 | 10 | 10 | 10 | 10 |
| | d | 3 | 3 | 3 | 3 | 3 | 3 | 3 | 0 |
| | d' | 0 | 0 | 0 | 0 | 0 | 0 | 0 | 0.73 |
| | e | 0.09 | 0.09 | 0.09 | 0.09 | 0.09 | 0.09 | 0.09 | 0.09 |
| | f | 6 | 0 | 0 | 0 | 0 | 0 | 0 | 2.27 |
| Partie P2 | a | 10 | 16,1 | 25.7 | 13.5 | 13.5 | 0 | 0 | 14 |
| | b1 | 30 | 48.2 | 0 | 40.5 | 40.5 | 0 | 72.3 | 42 |
| | b2 | 0 | 0 | 38.6 | 0 | 0 | 0 | 0 | 0 |
| | b3 | 0 | 0 | 10 | 0 | 0 | 0 | 0 | 0 |
| | b | 30 | 10 | 0 | 20.3 | 18.3 | 72.3 | 0 | 18.3 |
| | g | 0 | 0 | 0 | 0 | 2 | 2 | 2 | 0 |
| | h | 18 | 18 | 18 | 18 | 18 | 18 | 18 | 18 |
| | i | 7 | 7 | 7 | 7 | 7 | 7 | 7 | 7 |
| | j | 0.1 | 0.1 | 0.1 | 0.1 | 0.1 | 0.1 | 0.1 | 0.1 |
| | f | 4.9 | 0.6 | 0.6 | 0.6 | 0.6 | 0.6 | 0.6 | 0.6 |
| Viscosité P1+P2 mPa.s | | 5 200 | 3 200 | 11 600 | 4 400 | 3 500 | 55 000 | 2 100 | 5 200 |

3) Mise en oeuvre :

A 50 parties en volume de la composante P1, on ajoute 50 parties en volume de la composante P2. Le moussage et la réticulation sont obtenus après mélange manuel à l'aide d'une spatule, à 23 °C pendant 30 secondes environ. Les mousses obtenues sont évaluées (résultats consignés dans le Tableau 2.

4) Tests :

Tableau 2 : Exemples selon l'invention.

| Propriétés | Exemple 1 | Exemple 2 | Exemple 3 | Exemple 4 | Exemple 5 |
|---|---|---|---|---|---|
| Densité de la mousse réticulée ($g/cm^3$) | 0.18 | 0.18 | 0.16 | 0.18 | 0.18 |

(suite)

| Propriétés | | Exemple 1 | Exemple 2 | Exemple 3 | Exemple 4 | Exemple 5 |
|---|---|---|---|---|---|---|
| **DS00 après 1 jour** à **23°C** | | 33 +/- 1 | 54 +/- 1 | 55 +/- 1 | 44 +/- 1 | 51 +/- 2 |
| **Propriétés mécaniques après** 1 **jour à 23°C** | R/R (MPa) | 0.16 | 0.20 | 0.16 | 0.13 | 0.20 |
| | A/R (%) | 66 | 49 | 47 | 47 | 49 |
| | R/d (N/mm) | 1.0 | 0.7 | 1.03 | 1.05 | 0.8 |
| **Taille des bulles** | | Petites | Petites | Petites | Petites | Petites |

Tableau 3 : Exemples comparatifs.

| Propriétés | | Contre-exemple 6 | Contre-exemple 7 | Contre-exemple 8 |
|---|---|---|---|---|
| **Densité de la mousse réticulée ($g/cm^3$)** | | 0.26 | 0.26 | 0.28 |
| **DS00 après 1 jour à 23 °C** | | Non mesurable | 23 +/- 2 | 54 +/-1 |
| **Propriétés mécaniques après 1 jour à 23°C** | R/R (MPa) | Non mesurable | 0.04 | 0.39 |
| | A/R (%) | Non mesurable | 49 | 57 |
| | R/d (N/mm) | Non mesurable | 0.3 | 1.7 |
| **Taille des bulles** | | Non mesurable | Grosses | Petites |

- Tailles des pores inférieure à 1 mm = « petites bulles».
- Tailles des pores >> 1 mm = « grosses bulles ».

Les exemples 1 à 5 et les contre-exemples 6 à 8, mettent en évidence la présence indispensable de la résine et l'importance du système de moussage. En effet, le remplacement de l'alcool par de l'eau conduit à des mousses de densités nettement plus élevées (voir contre-exemple 8, présence de résine mais avec système de moussage à base d'eau). Les compositions selon l'invention permettent d'obtenir des mousses de faibles densités (inférieures à 0.20 $g/cm^3$) et ayant de bonnes propriétés mécaniques.

Les exemples 1, 2 et 3 montrent qu'une teneur importante en résine permet à la fois de diminuer les densités et d'augmenter la dureté Shore 00 (DS00).

Les exemples 4 et 5 montrent que l'ajout en faible quantité d'une huile avec des motifs vinylées dans la chaîne permet de moduler la DS00 tout en conservant une faible densité et de bonnes propriétés mécaniques.

Pour le contre-exemple 6, il n'a pas été possible de préparer les éprouvettes pour mesurer les propriétés mécaniques et la dureté du fait d'une viscosité supérieure à 50000 mPa.s (étalement de la composition difficile).

**EXEMPLES 9 à 11 : Préparation de mousses silicone reticulant à température ambiante ayant une bonne tenue au feu**

On prépare un mélange par malaxage des ingrédients tels que décrit dans le Tableau 4.

1) Nature des ingrédients cités dans la partie P1 des compositions testées:

- **a** : Résine polyorganosiloxane vinylée comprenant des motifs siloxyles M, $D^{Vi}$ et Q (ou « $MD^{Vi}Q$ »).
- **b :** Huile polydiméthylsiloxane bloquée à chacune des extrémités de chaînes par un motif $Vi(CH_3)_2SiO_{1/2}$ ayant une viscosité de 100 000 mPa.s à 25°C.
- **b1 :** Polydiméthylsiloxane bloqué par des motifs $(CH_3)_2ViSiO_{1/2}$ et dont la viscosité est de 3500 mPa.s à 25 °C.
- **c :** Terre de diatomées commercialisée sous la dénomination commerciale CELITE-SF.
- **c1** : Dioxyde de titane, commercialisée sous la dénomination commerciale Aeroxide® TiO2 P25
- **c2 :** Dioxyde de titane, commercialisée sous la dénomination commerciale Aeroxide® TiO2 PF2.

- **c3** : Oxyde de fer, commercialisée sous la dénomination commerciale Bayferrox® 306.
- **c4** : Hydroxyde de cérium.
- **c5** : Alumine tri-hydratée, commercialisée sous la dénomination commerciale APYRAL® 40 VSL.
- **d** : Butanol.
- **e** : Catalyseur au platine de Karstedt.
- **f** : Huile polydiméthylsiloxane bloquée à chacune des extrémités de chaînes par un motif $(CH_3)_3SiO_{1/2}$ ayant une viscosité de 1000 mPa.s à 25°C.

2) Nature des ingrédients cités dans la partie P2 des compositions testées :

- **a** : Résine polyorganosiloxane vinylée comprenant des motifs siloxyles M, $D^{Vi}$ et Q (ou « $MD^{Vi}Q$ »).
- **b** : Huile polydiméthylsiloxane bloquée à chacune des extrémités de chaînes par un motif $Vi(CH_3)_2SiO_{1/2}$ ayant une viscosité de 100 000 mPa.s à 25 °C.
- **b1** : Polydiméthylsiloxane bloqué par des motifs $(CH_3)_2ViSiO_{1/2}$ et dont la viscosité est de 3500 mPa.s. La teneur en vinyle de cette composition est de 0.6 % en poids.
- **f** : Huile polydiméthylsiloxane bloquée à chacune des extrémités de chaînes par un motif $(CH_3)_3SiO_{1/2}$ ayant une viscosité de 1000 mPa.s à 25 °C.
- **i** : Huile polydiméthylsiloxane bloquée à chacune des extrémités de chaînes par un motif $(CH_3)_2HSiO_{1/2}$.
- **h** : Huile polyméthylhydrogénosiloxane bloquée à chacune des extrémités de chaînes par un motif $(CH_3)_3SiO_{0,5}$.
- **j** : Solution contenant 1% d'éthynylcyclohexanol dans une huile polydiméthylsiloxane bloqué par des motifs $(CH_3)_2ViSiO_{1/2}$, ayant une viscosité de 600 mPa.s à 25 °C.

Le Tableau 4 ci-après décrit les compositions testées.

Tableau 4 :

| COMPOSITIONS : PARTIES EN POIDS | | | | |
|---|---|---|---|---|
| | Constituants | Exemple 9 | Exemple 10 | Exemple 11 |
| Partie P1 | a | 18.75 | 18.75 | 18.75 |
| | b1 | 56.25 | 56.25 | 56.25 |
| | b | 6 | 6 | 6 |
| | c | 4.5 | 8 | 0 |
| | c1 | 1 | 0 | 0 |
| | c2 | 0 | 2 | 0 |
| | c3 | 0.5 | 0 | 0 |
| | c4 | 4 | 0 | 0 |
| | c5 | 0 | 0 | 10 |
| | d | 3 | 3 | 3 |
| | e | 0.09 | 0.09 | 0.09 |
| | f | 6 | 6 | 6 |
| Partie P2 | a | 10 | 10 | 10 |
| | b1 | 30 | 30 | 30 |
| | b | 30 | 30 | 30 |
| | h | 18 | 18 | 18 |
| | i | 7 | 7 | 7 |
| | j | 0.1 | 0.1 | 0.1 |
| | f | 4.9 | 4.9 | 4.9 |
| Viscosité P1+P2 mPa.s | | 4 800 | 5 100 | 4 900 |

3) Mise en oeuvre :

A 50 parties en volume de la composante P1, on ajoute 50 parties en volume de la composante P2. Le moussage et la réticulation sont obtenus après mélange manuel à l'aide d'une spatule, à 23 °C pendant 30 secondes environ. Les mousses obtenues sont homogènes.

4) Tests

Comme le montrent les résultats des exemples 9 à 11 consignés dans le Tableau 5 ci-après, il est possible d'obtenir des mousses de faibles densités (inférieures à 0.20g/$cm^3$), ayant de bonnes propriétés mécaniques et des propriétés de tenue au feu excellentes :

Tableau 5 :

| Propriétés | Exemple 9 | Exemple 10 | Exemple 11 |
|---|---|---|---|
| Densité de la mousse réticulée (g/cm3) | 0.19 | 0.19 | 0.18 |
| DS00 après 1 jour à 23°C | 32+/-2 | 32 +/- 3 | 40 +/- 1 |

(suite)

| Propriétés | | Exemple 9 | Exemple 10 | Exemple 11 |
|---|---|---|---|---|
| **Propriétés mécaniques après 1 jour à 23°C** | R/R | 0.13 | 0.15 | 0.21 |
| | A/R | 69 | 65 | 65 |
| | R/d | 0.80 | 0.81 | 0.73 |
| **Résistance à la flamme selon le test UL 94V** | | V-0 | V-0 | V-2 |

Les tests de résistance à la flamme des élastomères obtenus sort effectués suivant le protocole défini par "The Underwritors Laboratories" (UL 94V), quatrième édition du 19 juin 1991, qui consiste à exposer une éprouvette verticalement (dont la longueur est de 127 mm, la largeur de 12,7 mm et l'épaisseur de 2 mm) à une exposition de 10 secondes à une flamme de 980 °C, et on mesure après cette exposition la durée d'extinction.

Le résultat est codifié selon les critères a) à d) suivants :

a) V-0 : Le temps de combustion maximum est inférieur à 10 secondes (auto-extinction), pas de chute de matériau incandescent (tenue au feu excellente),
b) V-1 : le temps de combustion maximum est inférieur à 30 secondes (auto-extinction) ; pas de chute de matériau incandescent (bonne tenue au feu),
c) V-2 : le temps de combustion maximum est inférieur à 30 secondes (auto-extinction) ; chute de matériau incandescent (tenue au feu), et
d) N.C : non classé (mauvaise tenue au feu).

**Revendications**

**1. -** Composition organopolysiloxanique qui après réticulation forme une mousse présentant les propriétés suivantes :

- une densité inférieure à 0,20 g/cm$^3$,
- une résistance à la rupture supérieure à 0,10 MPa selon la norme AFNOR NF T46002;
- ladite composition est constituée de:

(A) au moins un polyorganosiloxane **(A)** présentant, par molécule, au moins deux groupes alcényles, en $C_2$-$C_6$ liés au silicium, ayant une viscosité comprise entre 10 et 300 000 mPa.s mesurée à 25°C à l'aide d'un viscosimètre BROOKFIELD selon les indications de la norme AFNOR NFT 76 106 de mai 1982 et contenant des motifs siloxy vinyliques terminaux,
(B) au moins un polyorganosiloxane **(B)** présentant, par molécule, au moins deux atomes d'hydrogène liés au silicium et de préférence au moins trois motifs ≡SiH et ayant une viscosité comprise entre 1 et 5000 mPa.s,
(C) une quantité catalytiquement efficace d'au moins un catalyseur **(C)** composé d'au moins un métal appartenant au groupe du platine,
(D) au moins un composé **(D)** choisi parmi le groupe constitué par le n-propanol, le n-butanol, le n-hexanol et le n-octanol,
(E) éventuellement au moins une huile **(E)** diorganopolysiloxanique bloquée à chaque extrémité de sa chaîne par un motif triorganosiloxy dont les radicaux organiques liés aux atomes de silicium, sont choisis parmi les radicaux alkyles ayant de 1 à 8 atomes de carbone inclus tels que les groupes méthyle, éthyle, propyle et 3,3,3-trifluoropropyle, les groupes cycloalkyles comme les groupes cyclohexyle, cycloheptyle, cyclooctyle et les groupes aryle tels que xylyle, tolyle et phényle,
(F) éventuellement au moins une charge minérale et/ou métallique **(F),**
(G) éventuellement au moins un additif **(G),** et
(H) au moins une résine polyorganosiloxane **(H)** répondant aux conditions (1) et (2) suivantes :

(1) ladite résine est présente à raison d'au moins 10% en poids par rapport au poids total du polyorganosiloxane **(A)** et de la résine polyorganosiloxane **(H)** (= ratio en poids (H)/[(A)+(H)] x 100) ; et
(2) ladite résine comprend au moins deux motifs siloxyles différents choisis parmi ceux de formules **(I)** et **(II)** suivantes:

$$W_a\,Z_b\,SiO_{(4-(a+b))/2} \qquad (I)$$

dans laquelle :

- les symboles W, identiques ou différents, représentent chacun un groupe alcényle en $C_2$-$C_6$;
- les symboles Z, identiques ou différents, représentent chacun un groupe hydrocarboné monovalent non hydrolysable, exempt d'action défavorable sur l'activité du catalyseur, éventuellement halogéné et, de préférence choisi parmi les groupes alkyles ainsi que parmi les groupes aryles, et
- a est 1 ou 2, de préférence 1, b est 0, 1 ou 2 et la somme a + b est égale à 1, 2 ou 3, et

$$Z_c\,SiO_{(4-c)/2} \qquad (II)$$

dans laquelle Z a la même signification que ci-dessus et c est égal à 0, 1, 2 ou 3, et l'un au moins des motifs (I) ou (II) est un motif T ou Q,

- avec comme condition supplémentaire que le choix, la nature et la quantité des constituants sont déterminés de manière à ce que la viscosité de ladite composition doit être inférieure à 15 000 mPa.s.

**2.** **-** Composition organopolysiloxanique selon la revendication précédente **caractérisée en ce qu'**elle contient :

(A) 100 parties en poids d'au moins un polyorganosiloxane **(A)** présentant, par molécule, au moins deux groupes alcényles en $C_2$-$C_6$ liés au silicium, ayant une viscosité comprise entre 10 et 300 000 mPa.s et contenant des motifs siloxy vinyliques terminaux,
(B) de 0,5 à 50 parties en poids d'au moins un polyorganosiloxane **(B)** présentant, par molécule, au moins deux atomes d'hydrogène liés au silicium et de préférence au moins trois motifs ≡SiH et ayant une viscosité comprise entre 1 et 5000 mPa.s,
(C) une quantité catalytiquement efficace d'au moins un catalyseur **(C)** composé d'au moins un métal appartenant au groupe du platine,
(D) de 0,05 à 50 parties en poids d'au moins un composé **(D)** choisi parmi le groupe constitué par le n-propanol, le n-butanol, le n-hexanol et le n-octanol,
(E) de 0 à 50 parties en poids d'au moins une huile **(E)** diorganopolysiloxanique bloquée à chaque extrémité de sa chaîne par un motif triorganosiloxy dont les radicaux organiques liés aux atomes de silicium, sont choisis parmi les radicaux alkyles ayant de 1 à 8 atomes de carbone inclus tels que les groupes méthyle, éthyle, propyle et 3,3,3-trifluoropropyle, les groupes cycloalkyles comme les groupes cyclohexyle, cycloheptyle, cyclooctyle et les groupes aryle tels que xylyle, tolyle et phényle,
(F) de 0 à 150 parties d'au moins une charge minérale et/ou métallique **(F),**
(G) de 0 à 10 parties en poids d'au moins un additif **(G),** et
(H) au moins une résine polyorganosiloxane **(H)** répondant aux conditions (1) et (2) suivantes :

(1) ladite résine est présente à raison d'au moins 10% en poids par rapport au poids total du polyorganosiloxane **(A)** et de la résine polyorganosiloxane **(H)**
(= ratio en poids (H)/[(A)+(H)] x 100) ; et
(2) ladite résine comprend au moins deux motifs siloxyles différents choisis parmi ceux de formules:

$$W_a\,Z_b\,SiO_{(4-(a+b))/2} \qquad (I)$$

dans laquelle :

- les symboles W, identiques ou différents, représentent chacun un groupe alcényle en $C_2$-$C_6$;
- les symboles Z, identiques ou différents, représentent chacun un groupe hydrocarboné monovalent non hydrolysable, exempt d'action défavorable sur l'activité du catalyseur, éventuellement halogéné et, de préférence choisi parmi les groupes alkyles ainsi que parmi les groupes aryles, et
- a est 1 ou 2, de préférence 1, b est 0, 1 ou 2 et la somme a + b est égale à 1, 2 ou 3,

avec éventuellement au moins une partie des autres motifs sont des motifs de formule moyenne **(II)** suivante:

$$Z_c\, SiO_{(4-c)/2} \qquad \textbf{(II)}$$

dans laquelle Z a la même signification que ci-dessus et c est égal à 0, 1, 2 ou 3, et l'un au moins des motifs **(1)** ou **(II)** est un motif T ou Q.

- avec comme condition supplémentaire que le choix, la nature et la quantité des constituants sont déterminés de manière à ce que la viscosité de ladite composition doit être inférieure à 15 000 mPa.s.

3. **-** Composition organopolysiloxanique selon l'une quelconque des revendications précédentes **caractérisée en ce qu'**elle se présente en deux parties (bi-composant), une partie A comprenant le catalyseur **(C)** et le composé **(D)** et une partie B comprenant le polyorganosiloxane **(B),** et les autres constituants **(A), (E), (F), (G)** et **(H)** sont présents dans la partie A, dans la partie B ou dans les parties A et B.

4. **-** Mousse de silicone présentant les propriétés suivantes :

   - une densité inférieure à 0,20 g/cm$^3$, et
   - une résistance à la rupture supérieure à 0,10 MPa selon la norme AFNOR NF T46002;

   ladite mousse silicone étant susceptible d'être obtenue par réticulation d'une composition organopolysiloxanique telle que définie selon l'une quelconque des revendications 1 à 3.

5. **-** Utilisation de la composition organopolysiloxanique selon l'une des revendications 1 à 3 ou de la mousse de silicone selon la revendication 4 pour la tampographie.

6. **-** Utilisation de la composition organopolysiloxanique selon l'une des revendications 1 à 3 ou de la mousse de silicone selon la revendication 4 pour la préparation de mousses de remplissage ou de joints en mousse dans le domaine du bâtiment, du transport, de l'isolation électrique ou de l'électroménager.

## Patentansprüche

1. Organopolysiloxanzusammensetzung, die nach Vernetzung einen Schaumstoff bildet, der die folgenden Eigenschaften aufweist:

   - eine Dichte von weniger als 0,20 g/cm$^3$,
   - eine Bruchfestigkeit von mehr als 0,10 MPa gemäß der AFNOR-Norm NF T46002;
   - wobei die Zusammensetzung aus:

     (A) mindestens einem Polyorganosiloxan **(A),** das pro Molekül mindestens zwei siliciumgebundene $C_2$-$C_6$-Alkenylgruppen aufweist, eine bei 25°C mit Hilfe eines Brookfield-Viskosimeters gemäß den Angaben der AFNOR-Norm NFT 76 106 vom Mai 1982 gemessene Viskosität zwischen 10 und 300.000 mPa.s aufweist und endständige Vinylsiloxy-Einheiten enthält,
     (B) mindestens einem Polyorganosiloxan **(B),** das pro Molekül mindestens zwei siliciumgebundene Wasserstoffatome und vorzugsweise mindestens drei =SiH-Einheiten aufweist und eine Viskosität zwischen 1 und 5000 mPa.s aufweist,
     (C) einer katalytisch wirksamen Menge mindestens eines Katalysators **(C),** der aus mindestens einem Metall der Platingruppe besteht,
     (D) mindestens einer Verbindung **(D),** die aus der Gruppe bestehend aus n-Propanol, n-Butanol, n-Hexanol und n-Octanol ausgewählt ist,
     (E) gegebenenfalls mindestens einem Diorganopoly-siloxanöl **(E),** das an jedem Ende seiner Kette durch eine Triorganosiloxy-Einheit, deren an Siliciumatome gebundene organische Reste aus Alkylresten mit 1 bis 8 Kohlenstoffatomen einschließlich Methyl-, Ethyl-, Propyl- und 3,3,3-Trifluorpropylgruppen, Cycloalkylgruppen wie Cyclohexyl-, Cycloheptyl- und Cyclooctylgruppen und Arylgruppen wie Xylyl, Tolyl und Phenyl ausgewählt sind, blockiert ist,
     (F) gegebenenfalls mindestens einem mineralischen und/oder metallischen Füllstoff **(F),**

(G) gegebenenfalls mindestens einem Additiv **(G)** und
(H) mindestens einem Polyorganosiloxanharz **(H),** das den folgenden Bedingungen (1) und (2) entspricht:

(1) das Harz liegt in einer Menge von mindestens 10 Gew.-%, bezogen auf das Gesamtgewicht des Polyorganosiloxans **(A)** und des Polyorganosiloxanharzes **(H),** vor (=Gewichtsverhältnis (H)/[(A)+(H)] x 100); und
(2) das Harz umfasst mindestens zwei verschiedene Siloxyl-Einheiten, die aus denjenigen der folgenden Formeln **(I)** und **(II)** ausgewählt sind:

$$W_aZ_bSiO_{(4-(a+b))/2} \quad \mathbf{(I)}$$

worin:

- die Symbole W gleich oder verschieden sind und jeweils für eine $C_2$-$C_6$-Alkenylgruppe stehen;
- die Symbole Z gleich oder verschieden sind und jeweils für eine nicht hydrolysierbare einwertige Kohlenwasserstoffgruppe, die keinen ungünstigen Einfluss auf die Aktivität des Katalysators hat, gegebenenfalls halogeniert ist und vorzugsweise aus Alkylgruppen sowie Arylgruppen ausgewählt ist, stehen und
- a für 1 oder 2, vorzugsweise 1, steht, b für 0,1 oder 2 steht und die Summe von a + b gleich 1, 2 oder 3 ist, und

$$Z_cSiO_{(4-c)/2} \quad \mathbf{(II)}$$

worin Z die gleiche Bedeutung wie oben besitzt und c gleich 0, 1, 2 oder 3 ist, und mindestens eine der Einheiten **(I)** und **(II)** eine T- oder Q-Einheit ist,

besteht,

- mit der zusätzlichen Bedingung, dass die Wahl, die Beschaffenheit und die Menge der Bestandteile so bestimmt sind, dass die Viskosität der Zusammensetzung unter 15.000 mPa.s liegt.

**2.** Organopolysiloxanzusammensetzung nach dem vorhergehenden Anspruch, **dadurch gekennzeichnet, dass** sie:

(A) 100 Gewichtsteile mindestens eines Polyorganosiloxans **(A),** das pro Molekül mindestens zwei siliciumgebundene $C_2$-$C_6$-Alkenylgruppen aufweist, eine Viskosität zwischen 10 und 300.000 mPa.s aufweist und endständige Vinylsiloxy-Einheiten enthält,
(B) 0,5 bis 50 Gewichtsteile mindestens eines Polyorganosiloxans **(B),** das pro Molekül mindestens zwei siliciumgebundene Wasserstoffatome und vorzugsweise mindestens drei =SiH-Einheiten aufweist und eine Viskosität zwischen 1 und 5000 mPa.s aufweist,
(C) eine katalytisch wirksame Menge mindestens eines Katalysators **(C),** der aus mindestens einem Metall der Platingruppe besteht,
(D) 0,05 bis 50 Gewichtsteile mindestens einer Verbindung **(D),** die aus der Gruppe bestehend aus n-Propanol, n-Butanol, n-Hexanol und n-Octanol ausgewählt ist,
(E) 0 bis 50 Gewichtsteile mindestens eines Diorganopolysiloxanöls **(E),** das an jedem Ende seiner Kette durch eine Triorganosiloxy-Einheit, deren an Siliciumatome gebundene organische Reste aus Alkylresten mit 1 bis 8 Kohlenstoffatomen einschließlich Methyl-, Ethyl-, Propyl- und 3,3,3-Trifluorpropylgruppen, Cycloalkylgruppen wie Cyclohexyl-, Cycloheptyl- und Cyclooctylgruppen und Arylgruppen wie Xylyl, Tolyl und Phenyl ausgewählt sind, blockiert ist,
(F) 0 bis 150 Gewichtsteile mindestens eines mineralischen und/oder metallischen Füllstoffs **(F),**
(G) 0 bis 10 Gewichtsteile mindestens eines Additivs **(G)** und
(H) mindestens ein Polyorganosiloxanharz **(H),** das den folgenden Bedingungen (1) und (2) entspricht:

(1) das Harz liegt in einer Menge von mindestens 10 Gew.-%, bezogen auf das Gesamtgewicht des Polyorganosiloxans **(A)** und des Polyorganosiloxanharzes **(H),** vor (=Gewichtsverhältnis (H)/[(A)+(H)] x 100); und

(2) das Harz umfasst mindestens zwei verschiedene Siloxyl-Einheiten, die ausgewählt sind aus denjenigen der Formeln

$$W_aZ_bSiO_{(4-(a+b))/2} \quad \textbf{(I)}$$

worin:

- die Symbole W gleich oder verschieden sind und jeweils für eine $C_2$-$C_6$-Alkenylgruppe stehen;
- die Symbole Z gleich oder verschieden sind und jeweils für eine nicht hydrolysierbare einwertige Kohlenwasserstoffgruppe, die keinen ungünstigen Einfluss auf die Aktivität des Katalysators hat, gegebenenfalls halogeniert ist und vorzugsweise aus Alkylgruppen sowie Arylgruppen ausgewählt ist, stehen und
- a für 1 oder 2, vorzugsweise 1, steht, b für 0,1 oder 2 steht und die Summe von a + b gleich 1, 2 oder 3 ist, wobei es sich gegebenenfalls bei mindestens einem Teil der anderen Einheiten um Einheiten der folgenden durchschittlichen Formel (II) handelt:

$$Z_cSiO_{(4-c)/2} \quad \textbf{(II)}$$

worin Z die gleiche Bedeutung wie oben besitzt und c gleich 0, 1, 2 oder 3 ist, und mindestens eine der Einheiten **(I)** und **(II)** eine T- oder Q-Einheit ist,

enthält,
- mit der zusätzlichen Bedingung, dass die Wahl, die Beschaffenheit und die Menge der Bestandteile so bestimmt sind, dass die Viskosität der Zusammensetzung unter 15.000 mPa.s liegt.

3. Organopolysiloxanzusammensetzung nach einem der vorhergehenden Ansprüche, **dadurch gekennzeichnet, dass** sie in zwei Teilen (zweikomponentig) vorliegt, wobei ein Teil A den Katalysator **(C)** und die Verbindung **(D)** umfasst und ein Teil B das Polyorganosiloxan **(B)** umfasst und die anderen Bestandteile **(A), (E), (F), (G)** und **(H)** in Teil A, in Teil B oder in den Teilen A und B vorliegen.

4. Silikonschaumstoff, der die folgenden Eigenschaften aufweist:

- eine Dichte von weniger als 0,20 g/cm$^3$ und
- eine Bruchfestigkeit von mehr als 0,10 MPa gemäß der AFNOR-Norm NF T46002;

wobei der Silikonschaumstoff durch Vernetzung einer Organopolysiloxanzusammensetzung gemäß einem der Ansprüche 1 bis 3 erhältlich ist.

5. Verwendung der Organopolysiloxanzusammensetzung gemäß einem der Ansprüche 1 bis 3 oder des Silikonschaumstoffs gemäß Anspruch 4 für den Tampondruck.

6. Verwendung der Organopolysiloxanzusammensetzung gemäß einem der Ansprüche 1 bis 3 oder des Silikonschaumstoffs gemäß Anspruch 4 zur Herstellung von Füllschaumstoffen oder Schaumstoffdichtungen auf dem Bau-, Transport-, Elektroisolations- oder Elektrogerätesektor.

## Claims

1. Organopolysiloxane composition which, after crosslinking, forms a foam exhibiting the following properties:

- a density of less than 0.20 g/cm$^3$,
- a tensile strength of greater than 0.10 MPa according to the AFNOR NF T46002 standard;
- said composition being composed of:

(A) at least one polyorganosiloxane **(A)** exhibiting, per molecule, at least two $C_2$-$C_6$ alkenyl groups bonded

to the silicon, having a viscosity of between 10 and 300 000 mPa·s measured at 25°C using a Brookfield viscosimeter according to the instructions of the AFNOR NFT 76 106 standard of May 1982 and comprising end vinylsiloxy units,

(B) at least one polyorganosiloxane **(B)** exhibiting, per molecule, at least two hydrogen atoms bonded to the silicon and preferably at least three ≡SiH units and having a viscosity of between 1 and 5000 mPa·s,

(C) a catalytically effective amount of at least one catalyst **(C)** composed of at least one metal belonging to the platinum group,

(D) at least one compound **(D)** chosen from the group consisting of n-propanol, n-butanol, n-hexanol and noctanol,

(E) optionally at least one diorganopolysiloxane oil **(E)** blocked at each end of its chain by a triorganosiloxy unit, the organic radicals of which bonded to the silicon atoms are chosen from alkyl radicals having from 1 to 8 carbon atoms inclusive, such as the methyl, ethyl, propyl and 3,3,3-trifluoropropyl groups, cycloalkyl groups, such as the cyclohexyl, cycloheptyl and cyclooctyl groups, and aryl groups, such as xylyl, tolyl and phenyl,

(F) optionally at least one inorganic and/or metal filler **(F),**

(G) optionally at least one additive **(G),** and

(H) at least one polyorganosiloxane resin (H) corresponding to the following conditions (1) and (2):

(1) said resin is present in a proportion of at least 10% by weight, with respect to the total weight of the polyorganosiloxane **(A)** and of the polyorganosiloxane resin **(H)** (= ratio by weight (H)/[(A)+(H)] x 100); and

(2) said resin comprises at least two different siloxyl units chosen from those of following formulae **(I)** and **(II):**

$$W_aZ_bSiO_{(4-(a+b))/2} \qquad \textbf{(I)}$$

in which:

- the W symbols, which are identical or different, each represent a $C_2$-$C_6$ alkenyl group;
- the Z symbols, which are identical or different, each represent a nonhydrolyzable monovalent hydrocarbon group which has no unfavorable effects on the activity of the catalyst, is optionally halogenated and is preferably chosen from alkyl groups and from aryl groups, and
- a is 1 or 2, preferably 1, b is 0, 1 or 2 and the sum a + b is equal to 1, 2 or 3, and

$$Z_cSiO_{(4-c)/2} \qquad \textbf{(II)}$$

in which Z has the same meaning as above and c is equal to 0, 1, 2 or 3, and

at least one of the units **(I)** or **(II)** is a T or Q unit,

- with the additional condition that the choice, the nature and the amount of the constituents are determined so that the viscosity of said composition has to be less than 15 000 mPa·s.

**2.** Organopolysiloxane composition according to the preceding claim **characterized in that** it comprises:

(A) 100 parts by weight of at least one polyorganosiloxane **(A)** exhibiting, per molecule, at least two $C_2$-$C_6$ alkenyl groups bonded to the silicon and having a viscosity of between 10 and 300 000 mPa·s and comprising end vinylsiloxy units,

(B) from 0.5 to 50 parts by weight of at least one polyorganosiloxane **(B)** exhibiting, per molecule, at least two hydrogen atoms bonded to the silicon and preferably at least three ≡SiH units and having a viscosity of between 1 and 5000 mPa·s,

(C) a catalytically effective amount of at least one catalyst **(C)** composed of at least one metal belonging to the platinum group,

(D) from 0.05 to 50 parts by weight of at least one compound **(D)** chosen from the group consisting of n-propanol, n-butanol, n-hexanol and n-octanol,

(E) from 0 to 50 parts by weight of at least one diorganopolysiloxane oil **(E)** blocked at each end of its chain by a triorganosiloxy unit, the organic radicals of which bonded to the silicon atoms are chosen from alkyl radicals having from 1 to 8 carbon atoms inclusive, such as the methyl, ethyl, propyl and 3,3,3-trifluoropropyl groups, cycloalkyl groups, such as the cyclohexyl, cycloheptyl and cyclooctyl groups, and aryl groups, such as xylyl, tolyl and phenyl,
(F) from 0 to 150 parts of at least one inorganic and/or metal filler **(F),**
(G) from 0 to 10 parts by weight of at least one additive **(G),** and
(H) at least one polyorganosiloxane resin **(H)** corresponding to the following conditions (1) and (2):

(1) said resin is present in a proportion of at least 10% by weight, with respect to the total weight of the polyorganosiloxane **(A)** and of the polyorganosiloxane resin **(H)** (= ratio by weight (H)/[(A)+(H)] × 100); and
(2) said resin comprises at least two different siloxyl units chosen from those of formula:

$$W_aZ_bSiO_{(4-(a+b))/2} \qquad \textbf{(I)}$$

in which:

- the W symbols, which are identical or different, each represent a $C_2$-$C_6$ alkenyl group;
- the Z symbols, which are identical or different, each represent a nonhydrolyzable monovalent hydrocarbon group which has no unfavorable effects on the activity of the catalyst, is optionally halogenated and is preferably chosen from alkyl groups and from aryl groups, and
- a is 1 or 2, preferably 1, b is 0, 1 or 2 and the sum a + b is equal to 1, 2 or 3,

with optionally at least a portion of the other units being units of following average formula (**II**) :

$$Z_cSiO_{(4-c)/2} \qquad \textbf{(II)}$$

in which Z has the same meaning as above and c is equal to 0, 1, 2 or 3, and
at least one of the units **(I)** or **(II)** is a T or Q unit,

- with the additional condition that the choice, the nature and the amount of the constituents are determined so that the viscosity of said composition has to be less than 15 000 mPa·s.

**3.** Organopolysiloxane composition according to either one of the preceding claims, **characterized in that** it is provided in two parts (two-component), one part A comprising the catalyst **(C)** and the compound **(D)** and one part B comprising the polyorganosiloxane **(B),** and the other constituents **(A), (E), (F), (G)** and **(H)** are present in the part A, in the part B or in the parts A and B.

**4.** Silicone foam, exhibiting the following properties:

- a density of less than 0.20 g/cm$^3$, and
- a tensile strength of greater than 0.10 MPa according to the AFNOR NF T46002 standard;

said silicone foam being capable of being obtained by crosslinking an organopolysiloxane composition as defined in any one of Claims 1 to 3.

**5.** Use of the organopolysiloxane composition according to one of Claims 1 to 3 or of the silicone foam according to Claim 4 in pad printing.

**6.** Use of the organopolysiloxane composition according to one of Claims 1 to 3 or of the silicone foam according to Claim 4 for the preparation of filling foams or foam seals in the construction, transportation, electrical insulation or domestic electrical appliance field.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2589872 A
- US 3923705 B
- US 4189545 B
- US 4026844 B
- US 4418157 B
- US 5436274 B
- FR 2419962 A
- WO 0046282 A
- US 3159601 A
- US 3159602 A
- US 3220972 A
- EP 0057459 A
- EP 0188978 A
- EP 0190530 A
- US 3419593 A
- US 3775452 A
- FR 1126884 A
- FR 1136885 A
- FR 1236505 A
- GB 1024234 A
- FR 2757869 A
- JP 51035501 A
- FR 2166313 A
- EP 0347349 A
- FR 1528464 A
- US 6300455 B


### Littérature non-brevet citée dans la description


- **WALTER NOLL.** Chemistry and Technology of Silicones. Academic Press, 1-9